# EUROPEAN PATENT SPECIFICATION

(11) **EP 2 134 000 B1**
(45) Date of publication and mention of the grant of the patent: **03.05.2017**
(21) Application number: 09007416.2
(22) Date of filing: 04.06.2009
(51) Int. Cl.: H04B 1/00, H04W 88/06

(54) **Multi-band mobile communication device**
Multiband-Mobilkommunikationsgerät
Dispositif de communication mobile multi-bande

(30) Priority: 13.06.2008 TW 97122225
(43) Date of publication of application: 16.12.2009
(73) Proprietor: ASUSTeK Computer Inc., 11259 Taipei (TW)
(72) Inventor: Tang, Ching-Chung, Taipei 11259 (TW); Liao, Kuo-Chu, Taipei 11259 (TW)
(74) Representative: Becker Kurig Straus

(56) References cited:
- EP-A1- 1 460 771
- EP-A2- 1 670 147
- WO-A2-2005/039193
- US-A1- 2005 085 201
- US-A1- 2005 245 202
- US-A1- 2006 079 275
- US-A1- 2006 111 060

## Description

The present invention relates to a multi-band communication device, and more particularly to a multi-band communication device including two wireless signal processing circuits and two antenna units, in which one antenna unit transports signals in a specified frequency band and the other antenna unit transports signals in another frequency band.

Nowadays, portable electronic devices such as mobile phones become essential electronic products because they are usable wherever and whenever the users are. Recently, with increasing development of mobile computing technologies and electronic communication technologies, the mobile phones have enhanced transportation quality and improved signal processing mechanisms in order to provide better communication service and more operating applications.

According to the history and coverage area of the communication technologies, GSM (Global System for Mobile Communications) and CDMA (Code Division Multiple Access) are widely used. In the early stage, GSM is developed as a standard for a mobile telephone system that could be used across Europe. Initially, CDMA is used for America military communication applications. Recently, CDMA2000 and other 3G CDMA enhancement standards are used in commercial telecommunication systems. Due to some factors such as market shares, number of users or related supporting technologies, GSM becomes the most popular standard for mobile phones in the world.

As known, GSM system and CDMA system are different communication systems. For complying with different radio frequency allocation methods in different countries, the signal transmission (Tx) and signal reception (Rx) are performed in multiple frequency bands. For example, the GSM system is usually operated in the 850, 900, 1800 or 1900MHz frequency bands. A single antenna switch module is employed to select a proper operating frequency band from different wireless signal processing circuits, so that signals are transmitted and received via a common antenna unit.

In the development of the mobile communication systems, the GSM standard is a second generation (2G) mobile communication standard classified by ITU (International Communications Union); and a WCDMA (Wideband Code Division Multiple Access) standard is a third (3G) mobile communication standard developed according to the GSM system. The current WCDMA system can be operated in any frequency band. Since the mobile communication standards and the mobile communication technologies are gradually developed and revised, the mobile phones need to be updated or otherwise weeded out.

As previously described, CDMA2000 and other 3G CDMA enhancement standards are America standards, so that these standards are harmonized or compatible with each other. Similarly, since the WCDMA system and the GSM system are European communication systems, the WCDMA system and the GSM system are harmonized or compatible with each other. For example, some base stations of the WCDMA system can be shared in the GSM system. In accordance with the trend of designing mobile phones, a second generation (2G) mobile communication system and a third (3G) mobile communication standard communication system are integrated into a single mobile phone. Moreover, a common antenna unit is used for transmitting and receiving signals.

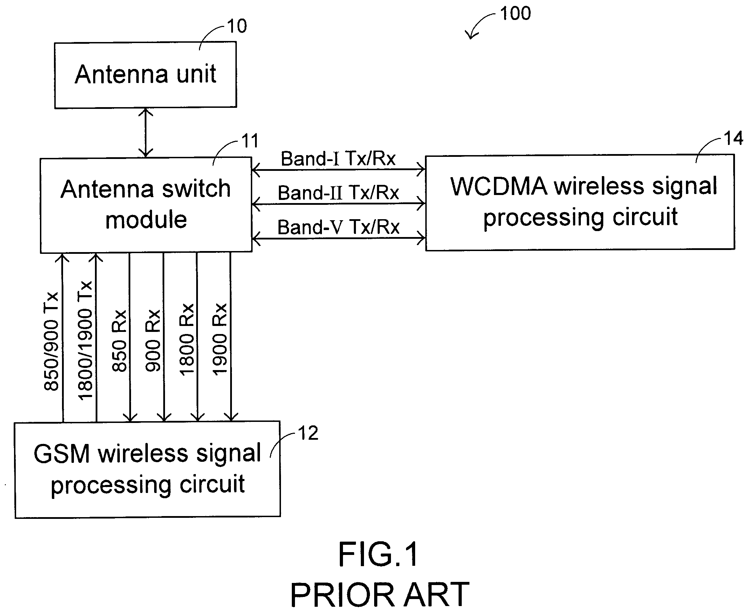

FIG. 1 is a schematic functional block diagram illustrating a mobile phone integrating the WCDMA system and the GSM system. As shown in FIG. 1, the mobile phone 100 principally comprises an antenna unit 10, an antenna switch module 11, a GSM wireless signal processing circuit 12 and a WCDMA wireless signal processing circuit 14. The signal transmission (Tx) and signal reception (Rx) of the GSM wireless signal processing circuit 12 and the WCDMA wireless signal processing circuit 14 are performed in different frequency bands. For example, the signal transmission (Tx) of the GSM wireless signal processing circuit 12 is performed in the 850/900MHz or 1800/1900MHz frequency bands. The signal reception (Rx) of the GSM wireless signal processing circuit 12 is performed in the 850, 900, 1800 or 1900MHz frequency bands. The signal transmission (Tx) and signal reception (Rx) of the WCDMA wireless signal processing circuit 14 are performed in three frequency bands, e.g. Band-I (2100MHz), Band-II (1900MHz) and Band-V (850MHz). The antenna switch module 11 is used for switching the operating frequency bands of the GSM wireless signal processing circuit 12 and the WCDMA wireless signal processing circuit 14. As a consequence, the wireless signals operated in all frequency bands by the GSM wireless signal processing circuit 12 and the WCDMA wireless signal processing circuit 14 can be transmitted and received through the antenna unit 10.

In accordance with the trend of designing mobile phones, different mobile communication systems are integrated into a single mobile phone. As a consequence, the integrated mobile phone can be operated in multi-bands for transmitting and receiving signals. Take a 3G WCDMA system for example. Since the antenna switch module 11 is required for switching a specified frequency band of transporting signals through the antenna unit 10, the power value of the signal is reduced, which is also referred as insertion loss. As known, several Decibel (dB) units of insertion loss adversely could influence the performance of transporting signals.

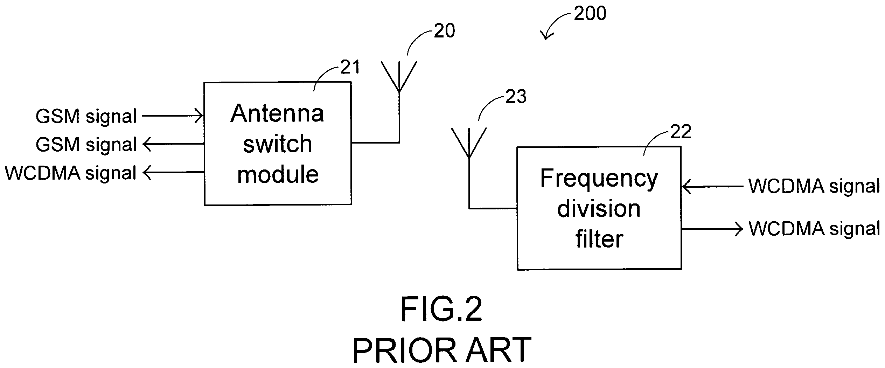

According to another mobile communication technology, the WCDMA system and the GSM system are separated from each other. The WCDMA system and the GSM system transport signals through different antenna units. FIG. 2 is a schematic functional block diagram illustrating another mobile phone. As shown in FIG. 2, the mobile phone 200 includes an antenna switch module 21 and a frequency division filter 22. A first antenna unit 20 is in communication with the antenna switch module 21. A second antenna unit 23 is in communication with the frequency division filter 22. The antenna switch module 21 and the first antenna unit 20 are used for transmitting and receiving GSM signals and WCDMA signals in specified frequency bands. The frequency division filter 22 and the second antenna unit 23 are used for transmitting and receiving WCDMA signals in specified frequency bands. In practice, the power loss of the signals generated by the frequency division filter 22 becomes more serious. Moreover, since the first antenna unit 20 and the second antenna unit 23 respectively in communication with the antenna switch module 21 and the frequency division filter 22 are switched in multiple frequency bands, the performance of transporting the WCDMA signals in some frequency bands will be deteriorated. The associated technologies of FIG. 2 are disclosed in for example US Patent Publication No. US 2006/0135210 A1.

EP 1 670 147 A1 discloses a method for an antenna architecture that handles World band cellular and broadcast channels. The method comprises receiving at a first radio frequency integrated circuit (RFIC) integrated within a mobile terminal, first signals via a first antenna, where the first signals comprise signals within at least one of a 2100 MHz band and a 1900 MHz band. The method further comprises receiving at a second RFIC integrated within the mobile terminal, second signals via the first antenna, where the second signals comprise signals within at least one of a 1900 MHz band, a 1800 MHz band, a 900 MHz band and a 850 MHz band. Additionally, third signals are received via the first antenna at a third RFIC integrated within the mobile terminal, where the third signals comprise signals within a VHF/UHF broadcast band.

US 2006/111060 A1 discloses a power control circuit having a stable high-speed operation, and a semiconductor device and a transceiver circuit using it. The power control circuit controls the gain of an amplifier so that power outputted from the amplifier reaches a desired value according to a digital control signal. The power control circuit includes a digital feedback loop which converts a detected signal obtained by detecting a value of the output power of the amplifier to a digital signal, determines a differential between the digital signal and the digital control signal, converts the differential to an analog signal and outputs a first feedback signal, an analog feedback loop which outputs a high frequency element corresponding to a differential between an analog signal to which the digital control signal is converted and the detected signal, as a second feedback signal, and an adder which determines the sum of the first and the second feedback signal and outputs a gain control signal for controlling the gain of the amplifier.

WO 2005/039193 A2 discloses a transceiver front-end having a plurality of signal paths operatively connected to at least two electrically separated antennas for transmitting and receiving communication signals in a plurality of frequency bands in GSM and W-CDMA modes.

US 2005/085201 A1 discloses a receive front-end module having one or more 2 GHz Rx paths and one or more W-CDMA Rx paths for use in a portable communication device, such as a mobile phone or a communicator device. The module comprises at least two feed points operatively connected to two electrically separate antennas for receiving communication signals.

US 2005/245202 A1 discloses a RF front-end having two antenna switches operatively connected to two separate antennas. The antenna switches can be used to route various transmit and receive paths to the antennas.

US 2006/079275 A1 discloses a RF front-end having a plurality of signal paths connectable to an internal antenna or an external antenna, an antenna switch part is used to select either the internal or the external antenna. In the antenna switch part, two series switches are used to operatively connect to the same connection point in each signal path.

EP 1 460 771 A1 discloses an antenna arrangement for a portable communication apparatus and a method for controlling the receive mode of the antenna arrangement.

The present invention relates to a multi-band communication device according to claim 1. The multi-band communication device includes a first wireless signal processing circuit, a second wireless signal processing circuit, an antenna switch module, a first antenna unit and a second antenna unit. The first wireless signal processing circuit is used for operating multiple first band signals. The second wireless signal processing circuit is used for operating multiple second band signals. The antenna switch module is in communication with the first wireless signal processing circuit and the second wireless signal processing circuit for switching the first band signals and a first portion of the second band signals. The first antenna unit is in communication with the antenna switch module. The second antenna unit is in communication with the second wireless signal processing circuit.

In the multi-band communication device of the present invention, one antenna unit is used to transport signals in a specified frequency band of the WCDMA system and the other antenna is used to transport signals in the frequency bands of the GSM system and another frequency band of the WCDMA system. Since the transmission power loss is reduced during the processes of switching the frequency bands of the WCDMA system and transporting signals, the performance of transporting signals is enhanced.

The above contents of the present invention will become more readily apparent to those ordinarily skilled in the art after reviewing the following detailed description and accompanying drawings, in which:
FIG. 1 is a schematic functional block diagram illustrating a mobile phone integrating the WCDMA system and the GSM system;
FIG. 2 is a schematic functional block diagram illustrating another mobile phone; and
FIG. 3 is a schematic functional block diagram illustrating a mobile phone according to an embodiment of the present invention.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

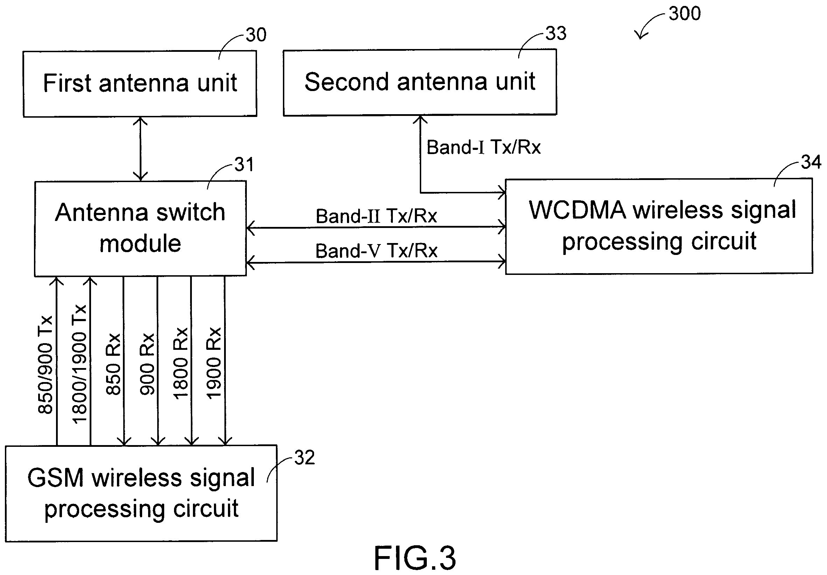

FIG. 3 is a schematic functional block diagram illustrating a mobile phone according to an embodiment of the present invention. An example of the mobile phone 300 is a multi-band communication device. That is, the signal transmission (Tx) and signal reception (Rx) of the mobile phone 300 are performed in multiple frequency bands. As shown in FIG. 3, the mobile phone 300 principally comprises an antenna switch module 31, a GSM wireless signal processing circuit 32 and a WCDMA wireless signal processing circuit 34. That is, the signal transmission and signal reception of the mobile phone 300 are performed according to the specifications defined by the WCDMA system and the GSM system.

The antenna switch module 31 is in communication with the wireless signal processing circuit 32 and the WCDMA wireless signal processing circuit 34. Like the mobile phone of FIG. 1, the signal transmission (Tx) and signal reception (Rx) of the GSM wireless signal processing circuit 32 and the WCDMA wireless signal processing circuit 34 of the mobile phone 300 are performed in different frequency bands. The GSM wireless signal processing circuit 32 can be used for operating multiple first band signals. For example, the transmitter (Tx) of the GSM wireless signal processing circuit 32 is operated in the 850/900MHz or 1800/1900MHz frequency bands. The reception (Rx) of the GSM wireless signal processing circuit 32 is performed in the 850, 900, 1800 or 1900MHz frequency bands. The WCDMA wireless signal processing circuit 34 is used for operating multiple second band signals. For example, the signal transmission (Tx) and signal reception (Rx) of the WCDMA wireless signal processing circuit 34 are performed in three frequency bands, e.g. Band-I (2100MHz), Band-II (1900MHz) and Band-V (850MHz).

In accordance with a key feature of the present invention, the mobile phone 300 includes a first antenna unit 30 and a second antenna unit 33. The first antenna unit 30 is a multi-band antenna. The second antenna unit 33 is a single-band antenna. The first antenna unit 30 is in communication with the antenna switch module 31. The second antenna unit 33 is directly in communication with the WCDMA wireless signal processing circuit 34.

The antenna switch module 31 is used for switching the first band signals that are operable by the GSM wireless signal processing circuit 32, thereby transmitting and receiving the switched first band signals through the first antenna unit 30. In addition, the antenna switch module 31 can also switch a first portion of the second band signals that are operable by the WCDMA wireless signal processing circuit 34, thereby transmitting and receiving the switched first portion of the second band signals through the first antenna unit 30. In an embodiment, the first portion of the second band signals is operated in the relatively lower-frequency band such as the Band-II (1900MHz) and the Band-V (850MHz).

On the other hand, the WCDMA wireless signal processing circuit 34 can operate a second portion of the second band signals, thereby directly transmitting and receiving the second portion of the second band signals through the second antenna unit 33. In an embodiment, the second portion of the second band signals is operated in the relatively higher-frequency band such as the Band-I (2100MHz). In other words, the second portion of the second band signals needs not to be switched by the antenna switch module 31. As a consequence, the power loss or insertion loss generated during the antenna switch module switches signals in multiple frequency bands of the WCDMA system will be minimized.

Please refer to FIG. 3 again. The second portion of the second band signals is operated in the relatively higher-frequency band (e.g. Band-I (2100MHz)) and directly transported through the second antenna unit 33. During the signal reception process, since the second antenna unit 33 is a single-band antenna, the signals received by the WCDMA wireless signal processing circuit 34 are very sharp and clear. During the signal transmission process, since the second portion of the second band signals is not switched by the antenna switch module 31, the energy consumed by the WCDMA wireless signal processing circuit 34 is very low. This low energy consumption is not detrimental to the transmitting power of the second antenna unit 33.

Since the second portion of the second band signals is not switched by the antenna switch module 31, the performance of transporting signals in the relatively higher-frequency band (e.g. Band-I (2100MHz)) is improved. Experiments show that the mobile phone of the present invention is improved in the total radiated power (TRP) test and the total isotropic sensitivity (TIS) test.

The second antenna unit 33 supports the second portion of the second band signals. That is, the second antenna unit 33 is a single-band antenna for transmitting and receiving signals in the Band-I. Since the Band-I is the highest frequency band (e.g. 2100MHz) of the WCDMA system, the efficacy of transporting signals in this band (e.g. 2100MHz) is enhanced. In addition, the layout area of the second antenna unit 33 is relatively smaller, and thus the space for accommodating the second antenna unit 33 in the mobile phone 300 is saved.

The antenna switch module 31 and the first antenna unit 30 do not need to support the second portion of the second band signals, which is transported in the highest frequency band (Band-I). That is, the antenna switch module 31 and the first antenna unit 30 only support the first band signals in all frequency bands of the GSM system and the first portion of the second band signals in other frequency bands of the WCDMA system (e.g. Band-II and Band-V). Since the antenna switch module 31 and the first antenna unit 30 do not support the highest frequency band signals, the performance of transmitting signals is also satisfied after the antenna switch module 31 switches the signals.

The above embodiments are illustrated by referring to mobile phones. Nevertheless, the multi-band communication device of the present invention can be other communication device such as a smart phone or a personal digital assistant (PDA). When this multi-band communication device is operated in two different communication systems, corresponding antenna units are used to transport signals in corresponding frequency bands.

In the above embodiments, the second portion of the second band signals is transported in the highest frequency band (i.e. the Band-I) through the single-band second antenna unit. Nevertheless, the second portion of the second band signals may be transported in other frequency band, for example the Band-II or Band-V as shown in FIG. 3 or even the Band-III or Band-IV of the WCDMA system. In other words, for achieving the optimal transporting performance, the second antenna unit 33 can transmit the second portion of the second band signals in a desired frequency band of the WCDMA system.

From the above description, the multi-band communication device of the present invention can be operated in the WCDMA system and the GSM system. During the processes of switching the frequency bands of the WCDMA system and transporting signals, the transporting power loss or the insertion loss is reduced and thus the performance of transporting signals is enhanced. When this multi-band communication device is operated in two different communication systems, corresponding antenna units are used to transport signals in corresponding frequency bands and thus optimal transporting performance is achievable. The present invention can achieve the optimal transmitting performance in a desired frequency band without the need of using the frequency division filter.

While the invention has been described in terms of what is presently considered to be the most practical and preferred embodiments, it is to be understood that the invention needs not to be limited to the disclosed embodiment.

The features disclosed in the foregoing description, in the claims and/or in the accompanying drawings may, both separately and in any combination thereof, be material for realizing the invention in diverse forms thereof.

## Claims

1. A multi-band communication device, the multi-band communication device comprising:
a first wireless signal processing circuit for operating multiple first band signals (32) ;
a second wireless signal processing circuit for operating multiple second band signals (34) ;
an antenna switch module (31) in communication with the first wireless signal processing circuit and the second wireless signal processing circuit for switching the first band signals and a first portion of the second band signals;
a first antenna unit (30) in communication with the antenna switch module (31); and
a second antenna unit (33) in communication with the second wireless signal processing circuit,
wherein the frequency bands respectively supported by the first antenna unit (30) and the second antenna (33) do not overlap and **characterized in that** the second antenna unit (33) is directly in communication with the second wireless signal processing circuit (34).

2. The multi-band communication device according to claim 1, **characterized in that** the first wireless signal processing circuit is a Global System for Mobile Communications GSM wireless signal processing circuit (32).

3. The multi-band communication device according to claim 1, **characterized in that** the second wireless signal processing circuit is a Wideband Code Division Multiple Access WCDMA wireless signal processing circuit (34).

4. The multi-band communication device according to claim 1, **characterized in that** the second antenna unit (33) transmits and receives the second band signals in the highest frequency band.

5. The multi-band communication device according to claim 1, **characterized in that** the second antenna unit (33) supports a second portion of the second band signals.

6. The multi-band communication device according to claim 1, **characterized in that** the first antenna unit (30) supports the first band signals and the first portion of the second band signals.

7. The multi-band communication device according to claim 1, **characterized in that** the second antenna unit (33) is a single-band antenna.

8. The multi-band communication device according to claim 1, **characterized in that** the first antenna unit (30) is a multi-band antenna.

9. The multi-band communication device according to claim 1, **characterized in that** the multi-band communication device is selected from a mobile phone (300), a smart phone or a personal digital assistant.

## Patentansprüche

1. Multiband-Kommunikationsvorrichtung, wobei die Multiband-Kommunikationsvorrichtung umfasst:
einen ersten Drahtlossignal-Verarbeitungsschaltkreis zur Verarbeitung mehrerer erste-Band-Signale (32);
einen zweiten Drahtlossignal-Verarbeitungsschaltkreis zur Verarbeitung mehrerer zweite-Band-Signale (32);
ein Antennenumschaltmodul (31) in Verbindung mit dem ersten Drahtlossignal-Verarbeitungsschaltkreis und dem zweiten Drahtlossignal-Verarbeitungsschaltkreis zum Umschalten des erste-Band-Signals und eines ersten Abschnitts des zweite-Band-Signals;
eine erste Antenneneinheit (30) in Verbindung mit dem Antennenumschaltmodul (31); und
eine zweite Antenneneinheit (33) in Verbindung mit dem zweiten Drahtlossignal-Verarbeitungsschaltkreis,
wobei die Frequenzbänder, die jeweils durch die erste Antenneneinheit (30) und die zweite Antenneneinheit (33) unterstützt werden, nicht überlappen und **dadurch gekennzeichnet, dass** die zweite Antenneneinheit (33) in direkter Verbindung mit dem zweiten Drahtlossignal-Verarbeitungsschaltkreis (34) steht.

2. Multiband-Kommunikationsvorrichtung gemäß Anspruch 1, **dadurch gekennzeichnet, dass** der erste Drahtlossignal-Verarbeitungsschaltkreis ein Global-System-zur-Mobilen-Kommunikation, GSM,-Drahtlossignal-Verarbeitungsschaltkreis (32) ist.

3. Multiband-Kommunikationsvorrichtung gemäß Anspruch 1, **dadurch gekennzeichnet, dass** der zweite Drahtlossignal-Verarbeitungsschaltkreis ein Breitband-Code-Division-Mehrfach-Zugangs, WCDMA, -Drahtlossignal-Verarbeitungsschaltkreis (34) ist.

4. Multiband-Kommunikationsvorrichtung gemäß Anspruch 1, **dadurch gekennzeichnet, dass** die zweite Antenneneinheit (33) das zweite-Band-Signal in dem höchsten Frequenzband überträgt und empfängt.

5. Multiband-Kommunikationsvorrichtung gemäß Anspruch 1, **dadurch gekennzeichnet, dass** die zweite Antenneneinheit (33) einen zweiten Abschnitt des zweite-Band-Signals unterstützt.

6. Multiband-Kommunikationsvorrichtung gemäß Anspruch 1, **dadurch gekennzeichnet, dass** die erste Antenneneinheit (30) das erste-Band-Signal und einen ersten Abschnitt des zweite-Band-Signals unterstützt.

7. Multiband-Kommunikationsvorrichtung gemäß Anspruch 1, **dadurch gekennzeichnet, dass** die zweite Antenneneinheit (33) eine Einzelbandantenne ist.

8. Multiband-Kommunikationsvorrichtung gemäß Anspruch 1, **dadurch gekennzeichnet, dass** die erste Antenneneinheit (30) eine Multibandantenne ist.

9. Multiband-Kommunikationsvorrichtung gemäß Anspruch 1, **dadurch gekennzeichnet, dass** die Multiband-Kommunikationsvorrichtung ausgewählt ist aus einem Mobiltelefon (300), einem Smartphone oder einem persönlichen digitalen Assistenten.

## Revendications

1. Dispositif de communication multibandes, le dispositif de communication multibandes comprenant :
un premier circuit de traitement de signal sans fil pour faire fonctionner des signaux de première bande multiples (32) ;
un second circuit de traitement de signal sans fil pour faire fonctionner des signaux de deuxième bande multiples (34) ;
un module de commutation d'antenne (31) en communication avec le premier circuit de traitement de signal sans fil et le second circuit de traitement de signal sans fil pour commuter les signaux de première bande et une première portion des signaux de deuxième bande ;
une première unité d'antenne (30) en communication avec le module de commutation d'antenne (31) ; et
un second circuit d'antenne (33) en communication avec le second circuit de traitement de signal sans fil,
dans lequel les bandes de fréquence respectivement prises en charge par la première unité d'antenne (30) et la seconde unité d'antenne (33) ne se superposent pas et **caractérisé en ce que** la seconde unité d'antenne (33) est directement en communication avec le second circuit de traitement de signal sans fil (34).

2. Dispositif de communication multibandes selon la revendication 1, **caractérisé en ce que** le premier circuit de traitement de signal sans fil est un circuit (32) de traitement de signal sans fil GSM (Global System for Mobile Communications).

3. Dispositif de communication multibandes selon la revendication 1, **caractérisé en ce que** le second circuit de traitement de signal sans fil est un circuit (34) de traitement de signal sans fil WCDMA (accès multiple par répartition de code large bande).

4. Dispositif de communication multibandes selon la revendication 1, **caractérisé en ce que** la seconde unité d'antenne (33) transmet et reçoit les signaux de deuxième bande dans la bande de fréquence la plus haute.

5. Dispositif de communication multibandes selon la revendication 1, **caractérisé en ce que** la seconde unité d'antenne (33) prend en charge une seconde portion des signaux de deuxième bande.

6. Dispositif de communication multibandes selon la revendication 1, **caractérisé en ce que** la première unité d'antenne (30) prend en charge les signaux de la première bande et la première portion des signaux de la deuxième bande.

7. Dispositif de communication multibandes selon la revendication 1, **caractérisé en ce que** la seconde unité d'antenne (33) est une antenne mono-bande.

8. Dispositif de communication multibandes selon la revendication 1, **caractérisé en ce que** la première unité d'antenne (30) est une antenne multi-bandes.

9. Dispositif de communication multibandes selon la revendication 1, **caractérisé en ce que** le dispositif de communication multi-bandes est sélectionné parmi un téléphone mobile (300), un téléphone intelligent ou un assistant numérique personnel.
